## Europäisches Patentamt
## European Patent Office
## Office européen des brevets

(19)

(11) Numéro de publication: **0014129**
**B1**

(12) **FASCICULE DE BREVET EUROPEEN**

(45) Date de publication du fascicule du brevet: 06.10.82

(51) Int. Cl.³: **F 16 K 27/06, F 16 K 5/02**

(21) Numéro de dépôt: 80400066.9

(22) Date de dépôt: 16.01.80

(54) Vanne pour fluide polluant ou dangereux avec commande et démontage à distance.

(30) Priorité: 22.01.79 FR 7901547

(43) Date de publication de la demande:
06.08.80 Bulletin 80/16

(45) Mention de la délivrance du brevet:
06.10.82 Bulletin 82/40

(84) Etats contractants désignés:
BE CH DE GB IT LU NL SE

(56) Documents cités:
FR-A-1 190 790
FR-A-1 507 204

(73) Titulaire: **SOCIETE GENERALE POUR LES TECHNIQUES NOUVELLES S.G.N. Société anonyme dite:, "LES QUADRANTS" avenue du Centre, 7, Montigny Le Bretonneux (Yvelines) (FR)**
Titulaire: **"TUFLIN S.A.R.L." Société à responsabilité limitée dite:, F-74370 Charvonex (FR)**

(72) Inventeur: **Villepreux, Robert, 35, avenue Mahieu, F-94100 St Maur (FR)**

(74) Mandataire: **de Haas, Michel et al, Cabinet Beau de Loménie 55 rue d'Amsterdam, F-75008 Paris (FR)**

Vanne pour fluide polluant ou dangereux avec commande et démontage à distance

La présente invention concerne une vanne utilisable dans les circuits véhiculant des fluides polluants, corrosifs ou dangereux et nécessitant l'utilisation de protections biologiques, aux fins de sectionnement et/ou de réglages.

Les installations dans lesquelles on doit manipuler des fluides, essentiellement des liquides, polluants, corrosifs o dangereux nécessitent l'utilisation de protections biologiques diverses; c'est notamment le cas des installations nucléaires dans lesquelles l'appareilleage est entouré d'écrans de protection qui arrêtent les rayonnements et empêchent la dissémination de gaz et d'aérosols radioactifs. Dans de telles installations, il est souhaitable de pouvoir disposer de vannes qui:

— présentent un volume mort nul ou aussi faible que possible (le volume mort étant constitué par d'éventuels culs-de-sac dans lesquels les substances dangereuses pourraient stagner ou s'accumuler),
— ne peuvent subir d'usure normale que sur des parties démontables,
— permettent le remplacement desdites parties d'usure démontables par manipulation à distance.

On a déjà décrit, dans le brevet français 1 507 204, un dispositif de raccordement étanche entre deux canalisations parcourues par un fluide dangereux, caractérisé en ce qu'il comporte en combinaison un corps de robinet classique muni notamment d'un clapet solidaire d'une tige susceptible d'un mouvement de déplacement assurant la mise en place de ce clapet sur son siège avec étanchéité par soufflet métallique et des moyens associés en regard des extrémités des canalisations à raccorder, ces moyens situés à l'intérieur d'une enceinte étanche de protection étant commandés à distance à travers la paroi de cette enceinte.

La présente invention concerne donc une vanne pour fluide polluant ou dangereux avec commande et démontage à distance hors d'une enceinte de protection biologique, caractérisée en ce qu'elle comporte:

— un corps de vanne avec des tuyauteries, l'une (ou les unes) ouvrant vers le milieu du corps et l'autre au fond dudit corps, ledit corps présentant une surface intérieure en forme de tronc de cône;
— un boisseau tournant s'adaptant à l'intérieur dudit corps et présentant au moins une surface latérale en matière plastique;
— une virole solidaire du corps de vanne constituée par une cheminée dont la partie supérieure est emboitée ou fixée sur l'enceinte de protection biologique;
— et un dispositif d'étanchéité et d'extraction du boisseau, disposé à l'intérieur de la virole et comportant:

   . une entretoise centrale entourant une tige solidaire de la face supérieure du boisseau et exerçant, sous l'effet d'un dispositif élastique, une pression sur la face supérieure du boisseau;
   . une entretoise périphérique entourant l'entretoise centrale et prenant appui sur la face supérieure du corps de vanne, la partie supérieure de ladite entretoise périphérique recevant une pièce vissée qui sert d'appui audit dispositif élastique;
   . une membrane métallique et une membrane en matière plastique intercalées entre la partie inférieure desdites entretoises et le corps de vanne et/ou le boisseau;
   . et au moins un dispositif démontable permettant de solidariser lesdites entretoises avec ladite virole tout en exerçant une pression sur la partie supérieure de l'entretoise périphérique.

Une des caractéristiques essentielles des vannes selon l'invention est le fait que le contact entre la surface intérieure du corps de vanne et la surface extérieure du boisseau est réalisé par l'intermédiaire d'une matière plastique convenable solidaire du boisseau.

Ladite matière plastique devant être solidaire du boisseau, on peut penser réaliser le boisseau lui-même, dans sa masse, à l'aide de la matière plastique. Les boisseaux de ce type nécessitent un choix particulier de la matière plastique pour tenir compte de la dilatation de ladite matière, sous l'influence des caractéristiques du fluide chaud qui passers dans la vanne. Il convient alors de réaliser de plus une solidarisation aussi complète que possible entre ledit boisseau et la tige qui est utilisée pour les manoeuvres dudit boisseau; cette solidarisation peut s'effectuer par tout moyen connu, mais, de préférence, par l'insertion, au moment du moulage du boisseau, de l'extrémité de ladite tige (cette extrémité ayant avantageusement la forme d'une étoile) dans la partie supérieure du boisseau.

La matière plastique peut également être utilisée sous forme d'un revêtement de la face extérieure conique du boisseau. Un tel revêtement peut être réalisé soit à l'aide d'un manchon en matière plastique, soit par moulage d'une certaine couche de matière plastique autour du boisseau.

Les matières plastiques utilisables selon l'invention sont essentiellement: les copolymères éthylène-tétrafluoréthylène (connussous le nom de TEFZEL (marque déposée)), le polytétrafluoréthylène (Teflon (marque déposée)), les copolymères éthylène-propylène-fluorés (FEP), le polyfluoroalcoxy, les copolymères éthylène-propylène, le polyéthylène.

En fait, les propriétés que l'on demande à ces matières plastiques sont essentiellement un bon coefficient de frottement, un coefficient de dilatation acceptable, une bonne résistance mécanique (notamment une bonne résistance au fluage) aux températures auxquelles les vannes seront soumises, une bonne tenue aux rayonnements ionisants et une résistance convenable à la corrosion chimique.

Pour les boisseaux entièrement en matière plastique, le TEFZEL, qui réalise un bon compromis entre la tenue à la température et la tenue aux rayonnements, semble constituer le matériau préféré.

Quels que soient la matière plastique utilisée et son mode de mise en place (boisseau massif ou revêtement), le coefficient de dilatation de cette matière plastique peut poser un certain nombre de problèmes lors de l'emploi des vannes à des températures variables. On a trouvé que ces problèmes pouvaient être résolus par l'emploi d'au moins un des moyens décrits ci-après: aménagement d'alvéoles sur la surface extérieure de la matière plastique, accrochage du revêtement en plastique à la partie basse du boisseau et espace de dilatation à la partie haute dudit boisseau, cette dilatation s'effectuant longitudinalement par rapport au boisseau, modification de la conicité du boisseau (et évidemment de l'intérieur du corps de vanne).

On peut donc aménager des alvéoles, par exemple coniques, à partir de la surface extérieure de la matière plastique. La profondeur de ces alvéoles est inférieure à celle du revêtement plastique, de manière à ne pas atteindre la surface métallique du boisseau, leur diamètre étant, par exemple, de l'ordre de 4 à 20 mm.

Ces alvéoles peuvent être régulièrement réparties sur toute la surface extérieure de la matière plastique ou localisées en certains points de cette surface (par exemple autour du ou des canaux latéraux ménagés dans le boisseau) où se posent des problèmes spécifiques de dilatation.

On utilisera de préférence le boisseau muni d'alvéoles lors d'une intervention pour remplacer le boisseau initial défectueux.

Cette intervention s'effectue dans des conditions telles que l'on ne peut s'assurer comme lors du montage initial de la parfaite adaptation du boisseau au corps (par suite de l'utilisation préalable en actif de l'ensemble du dispositif, et également par suite de rayures horizontales accindentielles et/ou d'usures avant pu survenir au cours du fonctionnement sur la face interne du corps de vanne).

L'intérêt de ces alvéoles, donc, est multiple:

— elles constituent des chambres d'expansion, régulièrement réparties, pour la matière plastique;

— elles permettent, dans une certaine mesure, d'accepter de légères déformations ou d'usure du corps de la vanne, sans nuire à l'étanchéité;

— elles permettent de réduire la force exercée par le dispositif élastique assurant l'étanchéité;

— en cas de changement du boisseau, l'adaptation du nouveau boisseau au corps de vanne est facilitée.

On peut également prévoir un dispositif d'accrochage du revêtement en plastique à la base du boisseau et laisser la dilatation dudit revêtement s'effectuer le long dudit boisseau vers le haut de celui-ci. Pour cela, l'accrochage à la base du boisseau peut s'effectuer par la présence d'un bourrelet à cette partie basse et par la fair que le revêtement entourera sur trois côtés ledit bourrelet. Mais on peut utiliser également d'autres moyens d'accrochage. Pour permettre la dilatation du revêtement vers le haut du boisseau on laissers un espace libre immédiatement au-dessus de la partie supérieure du revêtement en matière plastique.

Une conséquence de ce dispositif d'accrochage et de la dilatation le long du boisseau est que, si l'on souhaite ancrer plus étroitement le revêtement en matière plastique sur ledit boisseau, cet ancrage se fera de préférence grâce à des encoches tracées longitudinalement sur la surface du boisseau.

Avec une matière plastique solidaire du boisseau (selon la présente invention), il a été trouvé qu'il était souhaitable que ladite conicité soit supérieure à 2° (angle par rapport à l'axe), elle doit être, par ailleurs, pour des raisons d'encombrement, inférieure à 8 ou 10°. Par conséquent, on utilisera de préférence des conicités de 4 à 6°, ladite conicité étant d'autant plus élevée que le coefficient de frottement de la matière plastique est plus élevé.

On notera cependant que l'emploi d'une conicité de 4 à 6° n'est pas obligatoire. En effet, lorsque la conicité du boisseau est trop faible (2° par exemple par rapport à la verticale) et que la vanne est soumise à des cyclages en température au cours de son fonctionnement, on peut alors effectuer une adaptation du dispositif de fermeture comme indiqué ci-après.

Après passage d'un fluide chaud par exemple (qui a amené une dilatation différentielle et un léger soulévement du boisseau dans sa cavité), puis fermeture de la vanne, on ne conserve l'étanchéité interne du dispositif lors de la période de refroidissement que pendant un certain temps, une légère fuite (manifestée, par exemple, par un bullage d'air sous pression) venant se déclarer lors du retour à la température ambiante. Cette fuite, qui est due au coincement statique du boisseau dans le corps de la vanne, en dépit de la pression exercée par le dispsotif élastique, auquel il demeure soumis, peut être facilement évitée, si, après retour du corps de la vanne à la température ambiante, on fait subir une légère rotation au boisseau, de manière à réaliser son décoincement et sa redescente, la rotation maintenant le robinet en position fermée.

La réalisation industrielle de cette manoeuvre peut être automatisée: on peut, par exemple, fermer la vanne grâce à l'actionneur en assurant une rotation de 180° au boisseau, puis effectuer une rotation de 90° en sens inverse, soit au bout d'un certain temps adéquat (ajustable à l'aide d'une minuterie), soit avec une sonde de température détectant la redescente du corps de la vanne en dessours d'une certaine température. L'ouverture ultérieure de la vanne sera réalisée, le moment venu, par rotation de 90° ou de 180° de l'actionneur, selon que l'on avait ou non déjà effectué la manoeuvre de décoincement du boisseau.

Cette légère complication dans les automatismes de commande de la vanne peut évidemment être évitée si l'on prévoit un boisseau de conicité convenable (supérieur à l'angle de coincement), comme indiqué précédemment.

Les exemples non limitatifs suivants illustrent l'invention.

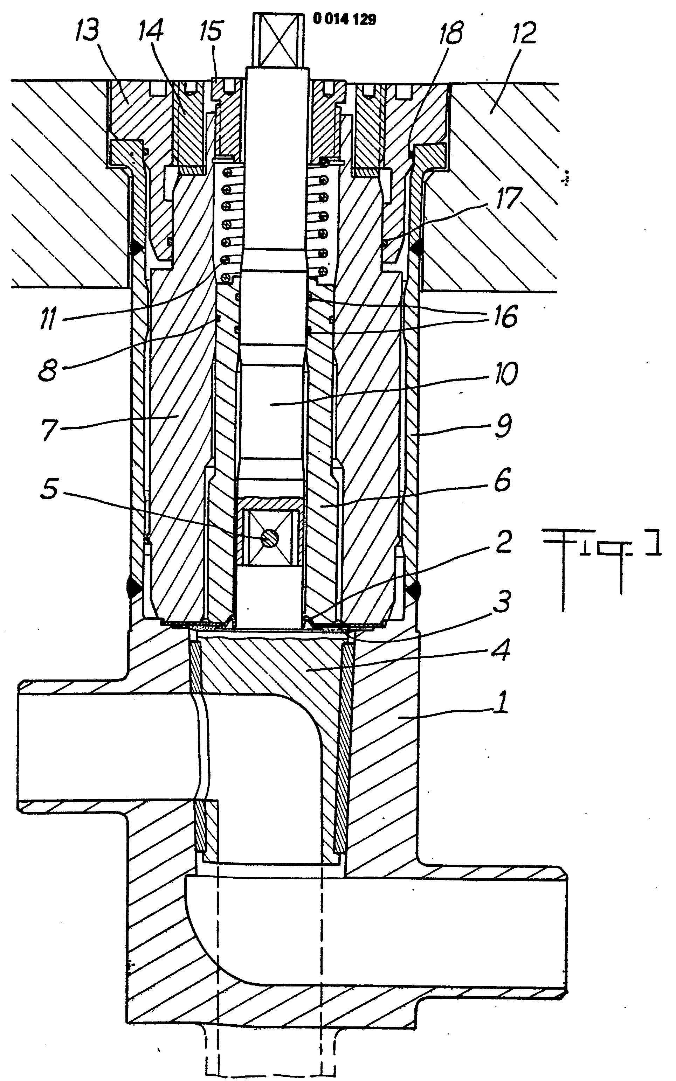

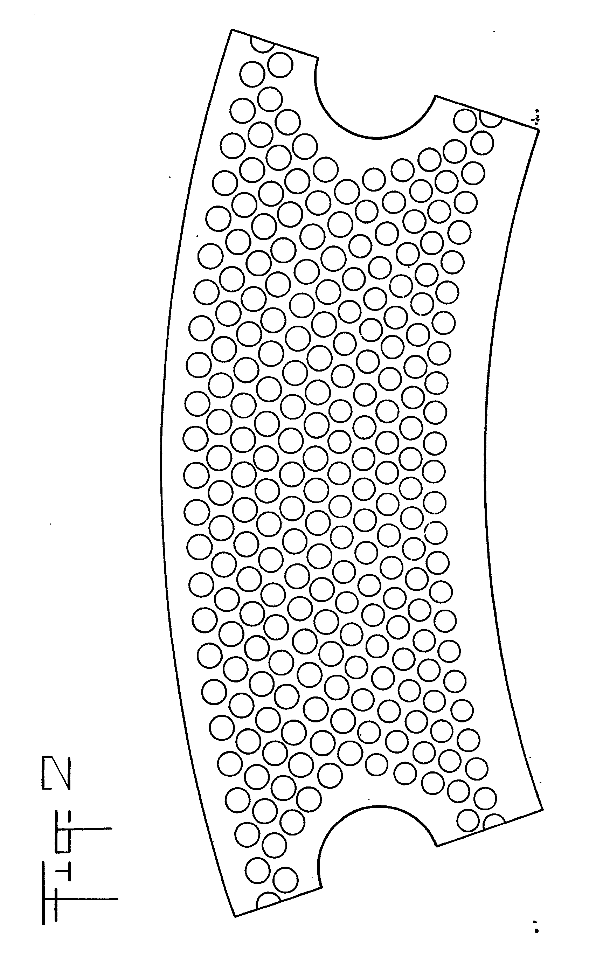

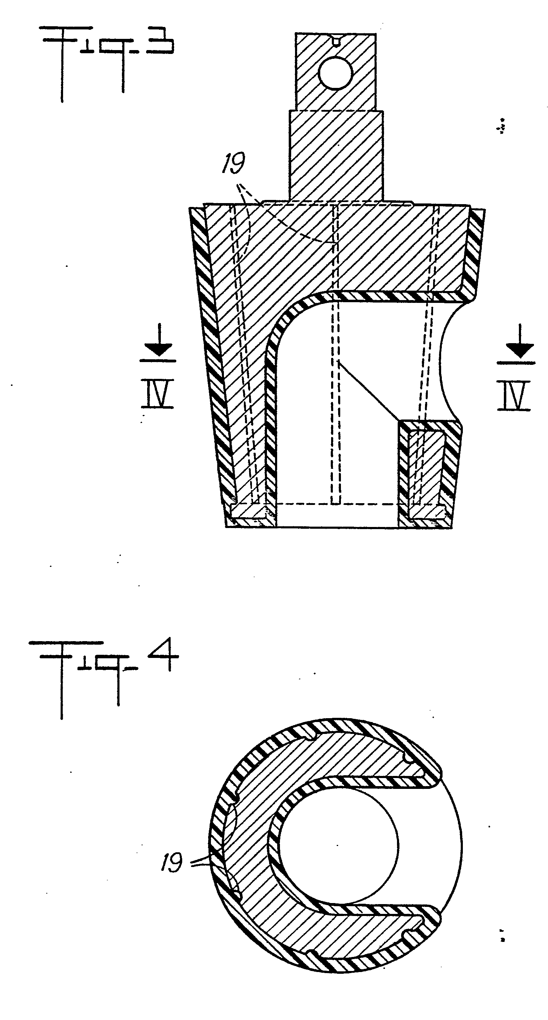

Les figures 1, 2, 3 et 4 illustrent l'invention: une vanne à démontage (figure 1), exemple d'alvéoles sur la surface (figure 2), exemple d'accrochage du revêtement (figures 3 et 4).

Une réalisation de la vanne selon la présente invention peut être illustrée par la figure 1.

Sur cette figure, on a représenté:

- le corps de vanne 1 en acier inoxydable portant deux tuyauteries parallèles dont l'une ouvre sur le fond du corps de vanne et dont l'autre ouvre sur le côté du corps de vanne, ces tuyauteries seront reliées par soudure aux tuyauteries de installation; l'intérieur du corps de vanne a la forme d'un tronc de cône dont les génératrices présentent une inclinaison classique vis-à-vis de l'axe de ce tronc de cône;
- le boisseau 4 qui est représenté en position d'ouverture, ce boisseau est muni, sur sa périphérie, c'est-à-dire dans sa partie en contact avec la paroi du corps de vanne, d'un revêtement en polytétrafluoréthylène ou en un polymère ou copolymère équivalent présentant à la fois une élasticité convenable, une bonne résistance aux agents chimiques et à la température et, éventuellement, une bonne résistance aux rayonnements;
- une virole ou fourreau extérieur 9 qui est soudé à la partie supérieure du corps de vanne; la hauteur de ladite virole est telle que son sommet peut être incorporé dans la protection biologique représentée sur la figure par une dalle de béton 12 (ou un bouchon métallique ménagé dans un bloc de béton);
- une entretoise centrale 6 ou disque de pression; cette entretoise centrale entoure une tige 10 fixée sur le boisseau et permettant d'entrainer ce boisseau en rotation; la tige 10 débouche d'ailleurs, éventuellement, par l'intermédiaire d'une tige complémentaire, à l'extérieur des dispositifs de protection biologique; les diamètres de l'entretoise 6 sont tels que la partie inférieure de cette entretoise repose sur la partie supérieure du boisseau en écrasant à la fois des membranes 2 et 3 superposées: à la partie supérieure de l'entretoise 6, on a positionné un ressort de compensation 11 qui appuie, d'un côté, sur la face supérieure de l'entretoise centrale et, d'un autre côté, sur un écrou 15 vissé dans l'entretoise périphérique 7 ou couvercle;
- une entretoise périphérique 7 ou couvercle disposé autor de l'entretoise centrale; dans la partie supérieure de 7, on a vissé une pièce ou écrou 15 solidarisant, par l'intermédiaire du ressort 11, les deux entretoises;
- sur leurs parties inférieures, les entretoises sont en contact avec les pièces correspondantes — corps de vanne et boisseau — par l'intermédiaire des deux membranes 2 et 3; il est souhaitable d'utiliser une combinaison de deux membranes dont l'une, 3, en matière plastique est disposée dans un logement ménagé dans le corps de vanne et comporte une lèvre sur la partie du joint entourant la base de la tige du boisseau et dont l'autre, 2, de nature métallique, s'étend sous les deux entretoises en recouvrant partiellement la membrane 3;
- de préférence les parties basses, des deux entretoises présenteront des parties troncôniques et disposées de façon que, en soulevant l'entretoise centrale 6, sa partie troncônique vienne en contact avec la partie troncônique de l'entretoise périphérique et entraine cette entretoise;
- la solidarisation des entretoises avec la virole; cette solidarisation, que l'on doit pouvoir enlever lorsque l'on veut extraire le boisseau, est réalisée sur le dispositif représenté, d'une part, par une bride supérieure 13 qui est fixée au moyen de boulons convenables sur la virole et, d'autre part, par un écrou de couvercle 14, de forme circulaire, qui est avantageusement vissé dans la pièce 13 et qui appuie en butée sur l'entretoise périphérique. L'effort d'appui de l'écrou est judicieusement apliqué pour obtenir une étanchéité entre le couvercle 7 et le corps 1.

L'étanchéité imposée par le confinement est avantageusement réalisée par divers joints d'étanchéité convenablement disposés, à savoir:

- deux joints 16 entre la tige solidaire du boisseau et l'entretoise centrale;
- un joint 8 entre les entretoises;
- un joint 17 entre les pièces supérieures, notamment la pièce vissée 13 et l'entretoise périphérique 7 ou couvercle;
- un joint 18 entre la pièce 13 de solidarisation avec la virole et ladite virole.

L'homme de l'art reconnaitra immédiatement les diverses possibilités de démontage et de remontage des vannes; le démontage s'obtiendra généralement par désolidarisation de la virole d'avec l'ensemble de la partie centrale de la vanne et sortie de l'ensemble de cette partie comportant notamment le boisseau, les entretoises et les pièces de solidarisation; le remontage de la vanne pourra s'efffectuer soit en mettant en place cette même partie centrale, soit en montant les pièces une à une.

Sur cette même figure on a représenté, en trait discontinu un corps de vanne dans lequel la tuyauterie située au fond dudit corps est disposée suivant l'axe du corps de vanne (et non pas perpendiculaire à cet axe comme dans l'exemple représenté en trait plein sur cette même figure).

La figure 2 représente, sous forme développée, une vue partielle d'un revêtement de matière plastique dans lequel on a creusé une série d'alvéoles convenablement réparties.

Les figures 3 et 4 représentent en coupe une vanna selon l'invention avec un dispositif d'accrochage du revêtement en matière plastique et des rainures longitudinales 19 qui permettent une bonne solidarisation du revêtement en matière plastique et du corps du boisseau sans gêner la dilatation longitudinale de la matière plastique.

L'accrochage à la base du boisseau est réalisé simplement en disposant au niveau de cette base une barriette que la matière plastique enserre et qui, de ce fait, constitue un »point fixe« lorsqu'il y a dilatation. Les reainores longitudinales 19 sont essentiellement visibles sur la figure 4 qui est une coupe IV-IV de la figure 3. Ces rainures 19 sont emplies de matière plastique, celle-ci étant mise en place, puis pressée à chaud contre le corps du boisseau.

En principe, les vannes selon l'invention pourront avoir des dimensions adaptées à toutes les tuyauteries; il est cependant plus particulièrement recommandé, notamment lorsque les vannes doivent être utilisées dans des conditions sévères et, par exemple, dans l'industrie atomique, d'employer lesdites vannes sur les tuyauteries de petits diamètres.

Il va de soi également que les vannes selon l'invention pourront être pourvues de collecteurs de fuites, de mise à évent, et de joints supplémentaires convenablement disposés pour répondre aux impératifs particuliers de confinement des liquides et/ou vapeurs radioactifs véhiculés dans les canalisations.

## Revendications

1. Vanne pour fluide polluant ou dangereux avec commande et démantage à distance hors d'une enceinte de protection biologique (12), caractérisée en ce qu'elle comporte:

- un corps de vanne (1) avec des tuyauteries l'une (ou les unes) ouvrant vers le milieu du corps et l'autre au fond dudit corps, ledit corps présentant une surface intérieure en forme de tronc de cône;
- un boisseau (4) tournant s'adaptant à l'intérieur dudit corps et présentant au moins une surface latérale en matière plastique;
- une virole (9) soildaire du corps de vanne (1) constituée par une cheminée dont la partie supérieure est emboîtée ou fixée sur l'enceinte de protection biologique (12)
- et un dispositif d'étanchéité et d'extraction du boisseau (4), disposé à l'intérieur de la virole et comportant:
  - . une entretoise centrale (6) entourant une tige (10) solidaire de la face supérieure du boisseau (4) et exerçant, sous l'effet d'un dispositif élastique (11), une pression sur la face supérieure du boisseau (4);
  - . une entretoise périphérique (7) entourant l'entretoise centrale (6) et prenant appui sur la face supérieure du corps de vanne (1), la partie supérieure de ladite entretoise périphérique (7) recevant une pièce vissée (15) qui sert d'appui audit dispsotif élastique (11).
  - . une membrane métallique (2) et une membrane en matière plastique (3) intercalées entre la partie inférieure desdites entretoises et le corps de vanne et/ou le boisseau;
  - . et au moins un dispositif démontable (13, 14) permettant de solidariser lesdites entretoises (6, 7) avec ladite virole (9) tout en exerçant une pression sur la partie supérieure de l'entretoise périphérique (7).

2. Vanne selon la revendication 1, caractérisée en ce que la surface latérale du boisseau (4) est revêtue d'une matière plastique choisie parmi les polymères et copolymères fluorés, le polyéthylène et les copolymères éthylène-propylène.

3. Vanne selon la revendication 1, caractérisée en ce que le boisseau (4) tournant est entièrement en matière plastique.

4. Vanne selon l'une quelconque des revendications précédentes, caractérisée en ce que des alvéoles ont été aménagées sur la surface ou partie convenable de la surface de ladite matière plastique en contact avec le corps.

5. Vanne selon l'une des revendications 1, 2 et 4, caractérisée en ce que le revêtement en matière plastique du boisseau (4) est monté de façon à pouvoir se dilater longitudinalement par rapport au boisseau.

6. Vanne selon l'une quelconque des revendications précédentes, caractérisée en ce que la conicité (angle par rapport à l'axe) de son boisseau (4) est comprise entre 2 et environ 8°.

## Patentansprüche

1. Hahn für ein verschmutzendes oder gefährliches Fluidum, mit Fernsteuerung und -ausbau außerhalb einer biologischen Schutzeinfassung (12), dadurch gekennzeichnet, daß er folgendes umfaßt:

— einen Hahnkörper (1) mit Rohrleitungen, von denen eine (oder die einen) zur Körpermitte hin und die andere zum Körperboden hin offen sind, wobei der Körper eine kegelstumpfförmige Innenfläche aufweist;
— ein drehbares Hahnküken (4), das sich an das Innere des Körpers anpaßt und zumindest eine Seitenfläche aus Plastikmaterial aufweist;
— einen zum Hahnkörper (1) gehörenden Ring (9), der durch einen Schacht gebildet wird, dessen Oberteil auf der biologischen Schutzeinfassung (12) eingesetzt oder fixiert ist, und
— eine Abdichtungs- und Ausbringvorrichtung des Kükens (4), welche im Inneren des Ringes angeordnet ist und folgendes umfaßt:
  . eine zentrale Hülse (6), welche eine mit der Oberseite des Kükens (4) verbundene und unter Wirkung einer elastischen Einrichtung (11) einen Druck auf die Oberseite des Kükens (4) ausübende Welle (10) umgibt;
  . eine periphere Hülse (7), welche die zentrale Hülse (6) umgibt und sich auf der Oberseite des Hahnkörpers (1) abstützt, wobei die Oberseite der peripheren Hülse (7) ein zur Abstützung der elastischen Einrichtung (11) dienendes Aufschraubstück (15) aufnimmt;
  . eine Metallmembran (2) und eine Membran aus Plastikmaterial (3), welche zwischen dem unteren Teil der Hülsen und dem Hahn- bzw. Kükenkörper gelagert sind;
  . und zumindest eine ausbaubare Einrichtung (13, 14), welche die Verbindung der Hülsen (6, 7) mit dem Ring (9) unter Ausübung eines Drucks auf den Oberteil der peripheren Hülse (7) gestattet.

2. Hahn nach Anspruch 1, dadurch gekennzeichnet, daß die Seitenfläche des Kükens (4) mit einem Plastikmaterial, wie fluorierten Polymeren und Copolymeren, Polyäthylen oder Äthylen-Propylen-Copolymeren beschichtet ist.

3. Hahn nach Anspruch 1, dadurch gekennzeichnet, daß das drehbare Küken (4) vollkommen aus Plastikmaterial ist.

4. Hahn nach einem der vorhergehenden Ansprüche, dadurch gekennzeichnet, daß Zellen auf der Oberfläche oder einem entsprechenden Teil der Oberfläche des Plastikmaterials, der mit dem Körper in Kontakt ist, vorgesehen sind.

5. Hahn nach einem der Ansprüche 1, 2 und 4, dadurch gekennzeichnet, daß die Beschichtung des Kükens aus Plastikmaterial derart angebracht ist, daß sie gegenüber dem Küken in Längsrichtung dehnbar ist.

6. Hahn nach einem der vorhergehenden Ansprüche, dadurch gekennzeichnet, daß die Konizität (Winkel zur Achse) des Kükens (4) zwischen 2 und etwa 8° beträgt.

## Claims

1. Valve for polluting or dangerous fluid, remotely controllable and dismountable from outside a biological protection enclosure (12), characterised in that it comprises:

— a valve body (1) with pipes, one (or more) of which issuing towards the middle of the body, the other issuing into the bottom of said body, said body presenting a truncated cone-shaped inner surface;
— a rotary plug (4) adaptable to the inside of said body and having at least a lateral surface in plastic material;
— an external sleeve (9) integral with the valve body (1) constituted by a shaft of which the upper part is fitted in and/or fastened on the biological protection enclosure (12) and
— a plug extracting and sealing member, placed inside the sleeve and comprising:
  . a central crosspiece (6) surrounding a rod (10) integral with the upper face of the plug (4) and exerting, under the effect of an elastic member (11), a pressure on the upper face of said plug (4);
  . a peripheral cross-piece (7) surrounding the central crosspiece (6) and resting on the upper face of the valve body (1), the upper part of said peripheral crosspiece (7) receiving a screwed part (15) serving as a support for said elastic member (11);
  . a metallic membrane (2) and a membrane in plastic material (3) inserted between the lower part of said crosspieces and the valve body and/or the plug;
  . and at least a dismountable device (13, 14) permitting to lock the said crosspieces (6, 7) with the said sleeve (9) whilst exerting a pressure on the upper part of the peripheral crosspiece (7).

2. Valve according to claim 1, characterised in that the lateral surface of the plug (4) is coated with a plastic material selected from fluor-containing polymers and copolymers, polyethylene and ethylene-propylene copolymers.

3. Valve according to claim 1, characterised in that the rotary plug (4) is entirely made of plastic material.

4. Valve according to any one of the preceding claims, characterised in that honeycomb cells have been provides on the surface or a suitable part of the surface of the saind plastic material in contact with the body.

5. Valve according to one of claims 1, 2 and 4, characterised in that the coating of plastic material on the plug (4) is fixed so as to be able to expand longitudinally with respect to the plug.

6. Valve according to any one of the preceding claims, characterised in that the conicity (angle with respect to the axis) of its plug (4) is between 2 and about 8°.

0 014 129

Fig. 1

Fig 2

Fig.3

19

IV          IV

Fig.4

19